# EUROPÄISCHE PATENTSCHRIFT

(11) **EP 3 551 014 B1**
(45) Veröffentlichungstag und Bekanntmachung des Hinweises auf die Patenterteilung: **10.11.2021**
(21) Anmeldenummer: 17811294.2
(22) Anmeldetag: 07.12.2017
(51) Int. Cl.: A47F 3/02

(54) **AUSGABEVORRICHTUNG FÜR BACKWAREN**
DISPENSING DEVICE FOR BAKERY PRODUCTS
DISPOSITIF DE DISTRIBUTION DE PRODUITS DE BOULANGERIE

(30) Priorität: 07.12.2016 DE 102016123717
(43) Veröffentlichungstag der Anmeldung: 16.10.2019
(73) Patentinhaber: R. Weiss Verpackungstechnik GmbH & Co. KG, 74564 Crailsheim (DE)
(72) Erfinder: WEISS, Reinald, 91626 Schopfloch (DE)
(74) Vertreter: Canzler & Bergmeier Patentanwälte Partnerschaft mbB
(86) Internationale Anmeldenummer: PCT/EP2017/081825
(87) Internationale Veröffentlichungsnummer: WO 2018/104449

(56) Entgegenhaltungen:
- DE-A1-102004 052 982
- DE-U1-202013 100 425

## Beschreibung

Die vorliegende Erfindung betrifft eine Ausgabevorrichtung zum Vorhalten, Präsentieren und Entnehmen von Backwaren mit mindestens einem Ausgabefach.

Derartige Einrichtungen sind insbesondere für das Vorhalten, Präsentieren und Entnehmen von fertig gebackenen Backwaren in Verkaufseinrichtungen wie beispielsweise Supermärkten von Interesse, bei denen dem Kunden die fertig gebackenen oder aufgebackenen Backwaren präsentiert und - nach Entnahme durch den Kunden - zum Verkauf angeboten werden.

Aus dem Stand der Technik sind Ausgabevorrichtungen, insbesondere für Backwaren bekannt, welche mehrere Ausgabefächer aufweisen. Die Ausgabefächer werden mittels menschlichen Zutuns mit Backwaren befüllt und den Kunden zur Entnahme präsentiert. Bei nicht ausreichend befüllten Ausgabefächern liegt die Verantwortung des Nachfüllens und Nachbackens der entsprechenden Backware bei dem hierfür zuständigen Personal. Nachteilig hierbei ist, dass eine Stückzahlbestimmung der jeweiligen Backware vom Personal durchzuführen ist.

Die DE 10 2004 052 982 A1 offenbart eine Ausgabevorrichtung mit den Merkmalen des Oberbegriffs des Anspruchs 1. Hierbei ist eine Sammelbox für Backwaren zwischen einem Zuführabschnitt und einem Entnahmeabschnitt vorgesehen. An der Sammelbox ist eine erste Lichtschranke angeordnet, die eine Mindestfüllstandhöhe für die Backwaren angibt. Weiterhin ist eine zweite Lichtschranke vorgesehen, die eine Entleerung der Sammelbox anzeigt.

Es ist Aufgabe der vorliegenden Erfindung, eine Einrichtung der eingangs genannten Art derart weiter zu entwickeln, dass ein verlässlicheres Nachfüllen des mindestens einen Ausgabefachs einer Ausgabevorrichtung möglich ist.

Diese Aufgabe wird durch die Merkmale des Anspruchs 1 gelöst.

Die erfindungsgemäße Ausgabevorrichtung zum Vorhalten, Präsentieren und Entnehmen von Backwaren umfasst mindestens ein Ausgabefach, das einen Zuführabschnitt, einen Entnahmeabschnitt und eine zwischen dem Zuführabschnitt und dem Entnahmeabschnitt angeordnete Transportfläche umfasst. Der Zuführabschnitt ermöglicht die Bestückung des Ausgabefaches mit Backwaren, vorzugsweise mittels einer automatisierten Zuführeinrichtung oder aber auch manuell. Backwaren können hierbei nicht nur hintereinander, sondern auch nebeneinander in dem Ausgabefach lagern. Der Entnahmeabschnitt befindet sich auf der zur Kundenseite gerichteten Front der Ausgabevorrichtung und dient dem Entnehmen der Backwaren durch Kunden. Die auf der Transportfläche befindlichen Backwaren werden vorzugsweise rutschend, d.h. getrieben durch ihre eigene Schwerkraft, in den Entnahmeabschnitt befördert.

Es ist eine Messeinrichtung vorgesehen, welche registriert, ob Backwaren auf ihrem Weg vom Zuführabschnitt zum Entnahmeabschnitt die Messeinrichtung passieren. Die Messeinrichtung kann hierbei feststellen, ob und/oder ob nicht sich Backwaren auf der Transportfläche bewegen und/oder dort lagern. Die Messeinrichtung ist hierbei derart ausgebildet und eingerichtet, dass sie die Anwesenheit und/oder Abwesenheit von Backwaren in dem Ausgabefach registriert und entsprechende elektrische Signale erzeugt. Diese können insbesondere von einer Steuereinheit weiterverarbeitet werden.

Erfindungsgemäß umfasst die Messeinrichtung eine Messfläche im Bereich der Transportfläche sowie einen mit der Messfläche gekoppelten Kraftaufnehmer (beispielsweise einen Kraftsensor), der zur Erzeugung von elektrischen Signalen ausgebildet ist, die von der Anwesenheit (bzw. Abwesenheit) und/oder dem Gewicht einer oder mehrerer Backwaren auf der Messfläche abhängen. Die Anwesenheit und/oder das Gewicht der Backwaren können hierbei gemessen werden, wenn die Backwaren auf der Messfläche ruhen oder auf dieser in Richtung des Entnahmeabschnitts transportiert werden, insbesondere rutschend. Die Backwaren können hierbei nicht nur hintereinander, sondern auch nebeneinander auf der Messfläche lagern.

Demnach kann der Kraftaufnehmer somit insbesondere registrieren, ob Backwaren auf der Messfläche vorhanden sind. Das entsprechende elektrische Signal kann dann weiterverarbeitet werden und beispielsweise ein Signal zur Nachfüllung des entsprechenden Ausgabefachs mit der entsprechenden Backware ausgeben und/oder ein Nachbacken veranlassen.

Vorteilhaft ist, wenn der Kraftaufnehmer als eine Wägezelle ausgebildet ist. Die Wägezelle kann Druckkräfte und/oder Zugkräfte ermitteln. Hierbei wird vorzugsweise ein Dehnmessstreifen eingesetzt, der eine elastische Verformung erfasst und weiterverarbeitet. Die dehnungsproportionale Widerstandsänderung ermöglicht es insbesondere, die Masse des Wiegegutes, d.h. einer oder mehrerer Backwaren, in ein proportionales elektrisches Signal umzuwandeln, um dieses dann insbesondere an eine Steuereinheit weiterzugeben. Eine derartige Ausgestaltung der Wägezelle ermöglicht ein genaues und zuverlässiges Messergebnis der auf die Wägezelle wirkenden Kraft, insbesondere der Gewichtskraft der Backware(n). Alternativ wird lediglich registriert, ob eine Backware auf der Messfläche vorhanden ist, wobei der Kraftaufnehmer das Überschreiten eines vorbestimmten Schellwerts registriert.

Gemäß einer vorteilhaften Ausgestaltung ist die Messfläche nicht unmittelbar am Entnahmeabschnitt angeordnet, sondern weiter stromaufwärts zum Zuführabschnitt hin. Vorzugsweise befindet sich die Messfläche mehrere Backwarenlängen hinter der vordersten Backware (d.h. der als nächstes zu entnehmenden Backware). Wenn die vorderste Backware und ggf. weitere Backwaren von einem Kunden entnommen werden, sind dann in der Regel immer noch weitere entsprechende Backwaren in dem Ausgabefach vorhanden, so dass dieses nachgefüllt werden kann, bevor es ganz entleert ist.

Besonders bevorzugt ist die Messeinrichtung, insbesondere der besagte Kraftaufnehmer, mit einer zur Ausgabevorrichtung gehörenden oder einer externen Steuereinheit gekoppelt. Diese ist insbesondere derart ausgebildet und eingerichtet, dass sie die von der Messeinrichtung, insbesondere dem besagten Kraftaufnehmer, übermittelten Signale verarbeiten und an eine Zuführeinrichtung übermitteln kann, wobei die Zuführeinrichtung vorzugsweise zum automatischen Zuführen von Backwaren zum jeweiligen Ausgabefach ausgebildet ist. Insbesondere kann von der Steuereinheit vorteilhafterweise registriert werden, ob und ggf. wie viele Backwaren die Messfläche passiert haben, um insbesondere mittels der Zuführeinrichtung eine ausreichende Bestückung des oder der Ausgabefächer zu gewährleisten. Es versteht sich von selbst, dass die Steuereinheit eine integrierte elektronische Verarbeitungseinheit (einen Rechner) aufweist oder mit einer externen elektronischen Verarbeitungseinheit bzw. einem Rechner verbunden ist. Beide Fälle sind vorliegend mit dem Begriff der Steuereinheit abgedeckt. Der Einfachheit halber ist daher im vorliegenden Rahmen von einer Steuereinheit die Rede, welche die elektrischen Signale verarbeiten kann.

Allerdings ist auch ein manuelles Nachfüllen möglich, wenn beispielsweise die Messeinrichtung, insbesondere der besagte Kraftaufnehmer, mit einer akustischen und/oder optischen Anzeige gekoppelt ist, welche einem Bediener ein Signal zum manuellen Nachfüllen des oder der Ausgabevorrichtungen gibt.

Vorteilhaft ist es, wenn mittels der Messeinrichtung, insbesondere mittels des besagten Kraftaufnehmers, zeitbezogene Anwesenheits- und/oder Gewichtsmessungen durchführbar sind. Die Gewichtsmessungen können hierbei zu vordefinierten Zeitintervallen durchgeführt werden. Die vordefinierten Zeitintervalle ermöglichen eine gute Bestandskontrolle und gewährleisten ein zeitgenaues Nachbacken und/oder Bestücken des oder der Ausgabefächer. Derartige Messungen ermöglichen eine automatisierte und regelmäßige Bestandsüberprüfung der jeweiligen Ausgabefächer. Alternativ oder zusätzlich wird kontinuierlich gemessen und bei Anwesenheit oder auch bei Abwesenheit einer Backware auf der Messfläche ein entsprechendes Signal ausgegeben, um damit ein ggf. notwendiges Bestücken des entsprechenden Ausgabefachs zu veranlassen. Weiterhin ist es möglich, auf Abfrage eines Bedieners hin, der sich ggf. an einem entfernten Ort befindet, eine Messung durchzuführen, so dass es somit beispielsweise möglich ist, Kontrollmessungen durchzuführen. Es können dann die Messergebnisse der zeitbezogenen und/oder ereignisbezogenen Messung mit diesen abfragespezifischen Messungen verglichen und zudem der aktuelle Bestand der Ausgabefächer von einem entfernten Ort, beispielsweise der Supermarktkasse oder von einem Büro im Supermarkt, überprüft werden.

Ebenso ist es vorteilhaft, wenn der Kraftaufnehmer neben oder unterhalb der Messfläche angeordnet ist. In beiden Fällen ist der Kraftaufnehmer in unmittelbarer Nähe der Messfläche vorgesehen, so dass ein einfacher Aufbau und genaue Messungen resultieren. Auch ist ein einfaches Auswechseln der entsprechenden Einheit möglich.

Um ein Rutschen der Backware zu realisieren, ist es vorteilhaft, wenn die Transportfläche als eine Schräge (oder mehrere aufeinander folgende Schrägen) ausgebildet ist. Bei einer derartigen Ausbildung ist es von Vorteil, wenn die Schräge (bzw. ein Schrägenabschnitt) in einem Winkel zwischen 20° und 60° gegenüber einer Horizontalen in Richtung des Entnahmeabschnitts geneigt ist. Je nach Backwarenart, deren Gewicht und/oder Konsistenz (mögliche Anhaftung an der Transportfläche) kann der Winkel vorteilhafterweise angepasst werden. Beispielsweise kann bei stärken anhaftenden Backwaren der Winkel der Schräge erhöht werden. Eine derartige Ausgestaltung bietet den Vorteil, dass keine unterschiedlichen Transportflächen benötigt werden, sondern lediglich durch die Winkelverstellung der passive, d.h. rutschende Transport unterschiedlicher Backwaren möglich ist.

Auch eine gebogene Ausgestaltung der Transportfläche ist möglich, genauso wie eine Kombination von aufeinander folgenden geraden und gebogenen Abschnitten entlang der Transportfläche. Es muss lediglich gewährleistet sein, dass - wenn die Schwerkraft der Backwaren ausgenutzt werden soll - die Backwaren sich rutschend in dem Ausgabefach zum Entnahmeabschnitt bewegen.

Es ist vorteilhaft, wenn ein Rüttler die auf der Transportfläche befindlichen Backwaren in den Entnahmeabschnitt befördert oder zu deren Beförderung beiträgt. Der motorisch angetriebene Rüttler kann beispielsweise als Stift oder eine Leiste ausgebildet sein, der bzw. die von unten auf die Transportfläche einwirkt und diese in eine hochfrequente Schwing- bzw. Rüttelbewegung versetzt. Hierbei ist es von Vorteil, dass keine unterschiedlichen Ausgestaltung der Transportflächen in den verschiedenen Ausgabefächern notwendig ist, da die Backwaren - vorzugsweise unterstützt durch eine Neigung der Transportfläche, welche das schwerkraftgetriebene Rutschen der Backwaren fördert - mittels des Rüttlers bewegt werden.

Gemäß einer alternativen Ausgestaltung ist ein rein aktiver Transport der Backwaren in den Ausgabefächern realisiert. Die Transportfläche kann beispielsweise ein oder mehrere in dem jeweiligen Ausgabefach in Richtung des Entnahmeabschnitts laufende Förderbänder umfassen.

Ebenfalls ist es vorteilhaft, wenn der Entnahmeabschnitt vorzugsweise mittels einer beweglichen Klappe verschließbar ist. Die bewegliche Klappe fungiert als eine Schutzvorrichtung, welche die Backwaren vor Verschmutzungen oder gedankenloser Berührung durch Kunden schützt und aktiv zur Entnahme der Backwaren geöffnet werden muss. Alternativ oder zusätzlich ist die Entnahmeöffnung als Entnahmeschlitz ausgebildet, durch welchen der Kunde auf die vorderste Backware zugreift. Auch hierdurch wird ein unbeabsichtigtes Anfassen der Backwaren durch einen Kunden vermieden.

Um ein Erkennen der Backware durch den Kunden zu erleichtern, ist es vorteilhaft, wenn die Klappe und/oder der Entnahmeschlitz aus einem durchsichtigen Material, insbesondere Kunststoff oder Glas, ausgebildet sind. Die durchsichtige Ausgestaltung dieser vorderfrontseitigen Elemente der Ausgabevorrichtung ermöglicht eine unmittelbare Präsentation der Backwaren, die den Kunden zum Kauf animieren soll.

In einer vorteilhaften Weiterbildung der Erfindung umfasst das Ausgabefach vorzugsweise ein Gestell, welches vorteilhafterweise gitterartig zum Freigeben des Blickes auf die Backwaren ausgebildet ist. Hierbei handelt es sich um eine konstruktiv besonders einfache und preiswerte Ausführungsform der Ausgabevorrichtung. Ebenfalls ist ein aus einem durchsichtigen Material, insbesondere aus Kunststoff oder Glas, ausgebildetes Ausgabefach mit Vorteil realisierbar.

Vorgeschlagen wird weiterhin eine Vorrichtung zum Speichern, Backen und Ausgeben von Backwaren, mit zumindest einer Speicherstation zur Aufnahme von ungebackenen oder noch nicht fertig gebackenen Backwaren, zumindest einer Backstation und zumindest einer wie vorbeschriebenen Ausgabevorrichtung. Die Backstation, die vorzugsweise als Durchlaufbackofen ausgebildet ist, ist zum Backen bzw. Aufbacken der Backwaren vorgesehen.

Besonders bevorzugt weist die Vorrichtung eine Zuführeinrichtung auf, die automatisiert für den Transport von Backwaren zwischen mindestens zwei der vorgenannten Einrichtungen, d.h. der mindestens einen Speicherstation , der Backstation und der Ausgabevorrichtung, ausgebildet und eingerichtet ist. Zusätzlich können eine Einschleusestation und/oder eine Ausschleusestation für mit Backwaren bestückte bzw. leere Träger vorgesehen sein, wobei eine oder beide dieser Stationen in einer Speicherstation integriert sein können. Die Zuführeinrichtung ist vorzugsweise als Roboter ausgebildet, der weiterhin bevorzugt zentral zwischen einer Einschleuse- und/oder Speicherstation, der Backstation, einer Zwischenspeicherstation und der Ausgabevorrichtung angeordnet ist. Hierbei sind diese genannten Einrichtungen bevorzugt zu je einer Seite des Roboters angeordnet, vorzugsweise ein Rechteck um den Roboter herum bildend.

Weiterhin ist es bevorzugt, dass eine Steuereinheit zur Steuerung der automatisierten Zuführeinrichtung vorgesehen ist, die auch die elektrischen Signale der Messeinrichtung, insbesondere des besagten Kraftaufnehmers, der Ausgabevorrichtung verarbeitet und entsprechend die automatisierte Zuführeinrichtung ansteuert. Die Steuereinheit übernimmt vorzugsweise auch die Steuerung zumindest einer der drei bzw. vier genannten Stationen bzw. Vorrichtungen.

Es ist vorteilhaft, wenn die Zuführeinrichtung derart ausgebildet ist, dass mittels der von der Steuereinheit übermittelten Signale die Bestückung mit Backwaren und/oder die Entnahme von Backwaren aus zumindest einer der Stationen möglich ist. Die Signale der Messeinrichtung, insbesondere des besagten Kraftaufnehmers, werden an die Steuereinheit übermittelt, so dass diese die Zuführeinrichtung zur Ausführung verschiedener Aktionen ansteuert. Beispielsweise entnimmt die derart angesteuerte Zuführeinrichtung ein Blech mit Backwaren aus der bzw. einer Speicherstation und übergibt dieses an die Backstation. Die Zuführeinrichtung kann vorzugsweise auch derart von der Steuereinheit angesteuert werden, dass Backwaren - einzeln oder auf einem Blech die Backstation durchlaufend - am Ausgang der Backstation aufgenommen und in die Zwischenspeicherstation oder direkt in die Ausgabevorrichtung transportiert werden. Die Ausbildung der Zuführeinrichtung als Roboter bietet hier Vorteile hinsichtlich Schnelligkeit und relativ einfacher Programmierung.

Mittels der Zuführeinrichtung sind somit Backwaren (einzeln vorliegend und/oder einzeln in Schalen bzw. auf Unterlagen und/oder zu mehreren auf Trägern bzw. Blechen bzw. Rosten) in die besagten Stationen und Vorrichtungen einbringbar und/oder entnehmbar und ein Transport zwischen diesen Stationen und Vorrichtungen möglich. Insbesondere kann die ausreichende Bestückung des oder der Ausgabefächer der Ausgabevorrichtung von der Zuführeinrichtung übernommen werden. Hierzu entnimmt die Zuführeinrichtung beispielsweise einen Träger mit den nachzufüllenden Backwaren aus einer Speicherstation, in der diese Träger mit den gebackenen bzw. aufgebackenen Backwaren gelagert sind, und überführt diesen zur Ausgabevorrichtung. Diese weist in der Regel mehrere Ausgabefächer auf. Damit die Zuführeinrichtung weiß, in welches Ausgabefach die Backwaren eingeführt werden müssen, sind entsprechende Informationen zur Identifikation der Ausgabefächer bzw. deren jeweiliger Messeinrichtungen beispielsweise in der Steuereinheit hinterlegt. Wenn also eine bestimmte Messeinrichtung ein vorgegebenes elektrisches Signal zwecks Nachfüllung mit Backwaren an die Steuereinheit schickt, gibt diese der Zuführeinrichtung den Befehl, die entsprechenden Backwaren in das Ausgabefach einzubringen. Zum einfachen Befüllen kann die Zuführeinrichtung beispielsweise einen endseitigen Greiferkopf mit einem Trichter aufweisen, der die Backwaren beim Abkippen vom Träger in den Zuführabschnitt des entsprechenden Ausgabefachs leitet. Der Trichter kann hierzu seinerseits verfahrbar in Bezug auf den Greiferkopf ausgebildet sein; beim Ergreifen des Trägers ist der Trichter beispielsweise in eine Ruheposition eingefahren und beim Abkippen in seine Arbeitsposition ausgefahren. Andere Leitkonstruktionen für die Backwaren zum jeweiligen Befüllen der Ausgabefächer, einschließlich solcher bei den Ausgabefächern selbst, sind alternativ oder zusätzlich möglich.

Ein möglicher Befehl an die Zuführeinrichtung kann auch sein, dass sie die Backofenstation mit Rohlingen bzw. ungebackenen Backwaren bestückt, die nicht mehr oder nicht mehr in ausreichender vorbestimmter Anzahl in dem entsprechenden Ausgabefach vorhanden sind. Auch ist es möglich, dass die Steuereinheit die Backstation ansteuert und das Aufbacken der entsprechend zur Backstation (mittels der Zuführeinrichtung) angelieferten Backwaren veranlasst oder steuert.

Weitere Vorteile der Erfindung sind in den nachfolgenden Ausführungsbeispielen beschrieben. Es zeigen:
- **Figur 1**: eine perspektivische Darstellung einer Vorrichtung zum Speichern, Backen und Ausgeben von Backwaren mit einer erfindungsgemäßen Ausgabevorrichtung;
- **Figur 2**: eine Schnittansicht der in Figur 1 dargestellten Ausgabevorrichtung;
- **Figur 3**: eine schematische Darstellung der Signalübermittlung der Messeinrichtung an eine Steuereinheit, und
- **Figur 4**: eine Schnittansicht eines weiteren Ausführungsbeispiels einer Ausgabevorrichtung, vorliegend mit Rüttlern.

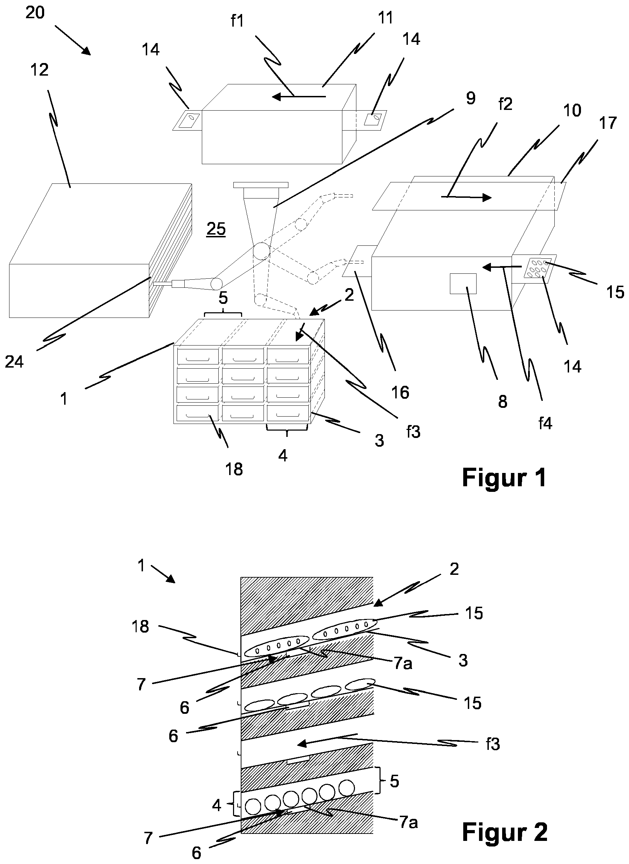

In der Figur 1 ist in perspektivischer Darstellung eine Vorrichtung 20 zum Speichern, Backen und Ausgeben von Backwaren 15 dargestellt, die vorzugsweise in einem Supermarkt in einem vom Kundenbereich separaten Raum aufgestellt ist, aber an den Kundenbereich angrenzt. Hierbei sind eine Einschleuse- und Speicherstation 10, eine als Durchlaufbackofen ausgebildete Backstation 11, eine Zwischenspeicherstation 12 und eine Ausgabevorrichtung 1 vorgesehen. Die Einschleuse- und Speicherstation 10 dient zum Einschleusen von Trägern 14 (beispielsweise Backblechen), auf denen zu backende Backwaren 15 lagern, zum Lagern von Trägern 14 mit noch nicht gebackenen oder schon gebackenen Backwaren 15, sowie zum Ausschleusen von leeren Trägern 14. Die der Einschleuse- und Speicherstation 10 gegenüberliegende Zwischenspeicherstation 12 weist eine Mehrzahl von Speicherfächern 24 für mit Backwaren 15 befüllte oder leere Träger 14 auf. Die Backstation 11 kann an einem Ende mit Trägern 14, auf denen sich vorgebackene oder noch ungebackene Backwaren 15 befinden, beschickt werden. Die Durchlaufrichtung der Backwaren ist mit dem Pfeil f1 gekennzeichnet. Am anderen Ende der Backstation 11 können dann die Träger 14 mit den fertig gebackenen Backwaren 15 entnommen werden. An der Ausgabevorrichtung 1, auf die später genauer eingegangen wird, können die gebackenen Backwaren 15 entnommen werden.

Zentral in Bezug auf die Einschleuse- und Speicherstation 10, die Backstation 11, die Zwischenspeicherstation 12 und die Ausgabevorrichtung 1 ist eine als Roboter ausgebildete Zuführeinrichtung 9 vorgesehen, die beispielsweise hängend an einer Gebäudedecke (nicht dargestellt) befestigt ist. Der Roboter ist in allen drei Raumrichtungen beweglich und weist einen endseitigen Greifabschnitt auf, mit dem er insbesondere Träger 14 randseitig ergreifen kann, um den Träger 14 - mit oder ohne darauf befindliche Backwaren 15 - im Innenraum 25 der Vorrichtung 20 zu bewegen.

Eine als Anförderband 16 ausgebildete Transporteinrichtung führt durch die Einschleuse- und Speicherstation 10 zu dem Innenraum 25 der Vorrichtung 20. Auf das Anförderband 16 (Förderrichtung f4) sind mit Backwaren 15 belegte Träger 14 von außen auflegbar, beispielsweise manuell, die dann nach Durchlaufen der Einschleuse- und Speicherstation 10 von der Zuführeinrichtung 9 ergreifbar sind und zu der Backstation 11 oder in die Speicherfächer 24 der Zwischenspeicherstation 12 transportierbar sind. Auch ist ein Einbringen der Träger 14 mittels der Zuführeinrichtung 9 in die nicht näher dargestellten Fächern der Einschleuse- und Speicherstation 10 selbst möglich. Es kann auch - alternativ oder zusätzlich - vorgesehen sein, dass diese Fächer von außen mit Trägern 14 und darauf befindlichen Backwaren 15 als Rohlingen bestückt werden. Die Zuführeinrichtung 9 übernimmt vorliegend im Innenraum 25 der Vorrichtung 20 alle Transportwege der mit oder ohne Backwaren 15 bestückten Träger 14. Ein Abförderband 17 für die entleerten Träger 14 ist in dem dargestellten Ausführungsbeispiel nur schematisch oberhalb des Gehäuses der Einschleuse- und Speicherstation 10 dargestellt (Förderrichtung f2). Hierbei legt die Zuführeinrichtung 9 die leeren Träger 14 auf das Abförderband 17 ab, welches aus dem Innenraum 25 herausführt.

Wie der Figur 1 sowie der Schnittansicht der Figur 2 zu entnehmen ist, umfasst die Ausgabevorrichtung 1 eine Vielzahl von nebeneinander und übereinander angeordneten Ausgabefächern 2 mit jeweils einem Zuführabschnitt 5, einem Entnahmeabschnitt 4 und einer zwischen diesen angeordneten Transportfläche 3. Die Transportfläche 3 ist vorliegend in einem Winkel von ca. 25° in Richtung des Entnahmeabschnitts 4 geneigt ausgebildet, so dass die Backwaren, von ihrer Schwerkraft getrieben, zum Entnahmeabschnitt 4 zu rutschen vermögen. Bei einer Weiterbildung ist vorgesehen, dass die Transportfläche 3 in ihrer Neigung einstellbar ist.

Die auf der Transportfläche 3 befindlichen Backwaren 15 rutschen (Rutschrichtung f3) von dem Zuführabschnitt 5 zum Entnahmeabschnitt 4. Durch den der Kundenseite abgewandten Zuführabschnitt 5 sind die Backwaren 15 mittels der Zuführeinrichtung 9 in die jeweiligen Abgabevorrichtungen 1 abladbar.

Erfindungsgemäß ist eine Messeinrichtung 7 vorgesehen, welche die Anwesenheit und/oder die Abwesenheit von Backwaren 15 in dem jeweiligen Ausgabefach 2 registriert. Bei den gezeigten Ausführungsbeispielen umfasst die Messeinrichtung 7 eine Messfläche 7a im Bereich der Transportfläche 3, wobei die Messfläche 7a vorliegend plan in die Transportfläche 3 integriert ist bzw. von dieser umschlossen ist. An der Unterseite der Messfläche 7a ist ein Kraftaufnehmer 6 als Teil der Messeinrichtung 7, beispielsweise einen Dehnmessstreifen umfassend, gekoppelt, der vorliegend als an sich bekannte Wägezelle ausgebildet ist. Der Kraftaufnehmer 6 ist imstande, ein elektrisches Signal in Abhängigkeit von der Anwesenheit (mittels Schwellwertüberschreitung) und/oder dem Gewicht mindestens einer Backware 15 auf der Messfläche 7a zu erzeugen. Hierbei kann die mindestens eine Backware 15 sich ruhend auf der Messfläche 7a befinden (weil sie beispielsweise an einer anderen, vor ihr lagernden Backware 15 anliegt) oder über die Messfläche 7a rutschen.

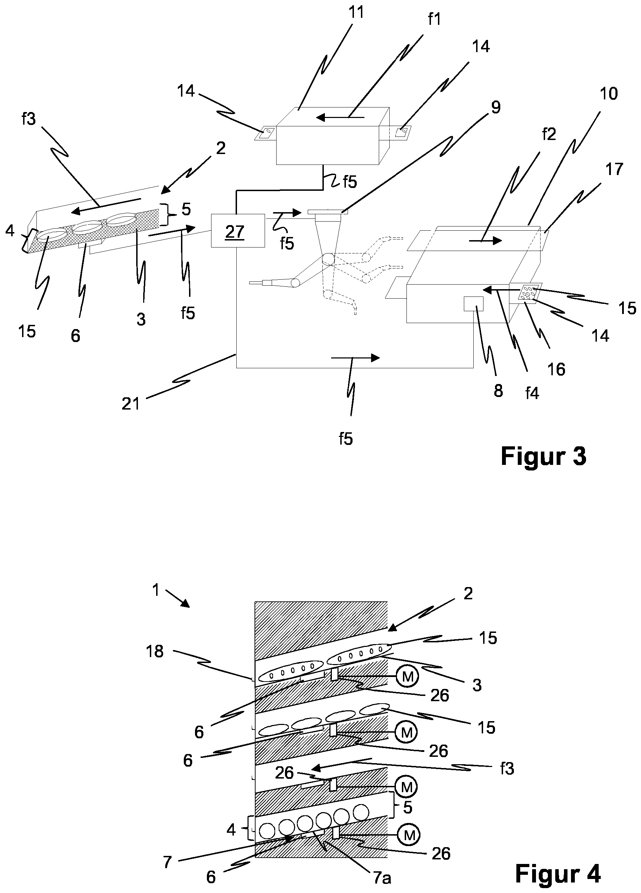

Gemäß dem Ausführungsbeispiel der Figur 2 ist die Messfläche 7a im untersten Ausgabefach 2 derart angeordnet, dass die zwei dem Entnahmeabschnitt 4 nächstliegenden, also die beiden vordersten Backwaren 15 auf ihrem Weg von dem Zuführabschnitt 5 die Messfläche 7a passiert haben. Die nachfolgenden beiden Backwaren 15 befinden sich hingegen auf der Messfläche 7a, da ihr Weg zum Entnahmeabschnitt 4 durch die vorderen Backwaren 15 blockiert ist. Im zweitobersten Ausgabefach 2 sind als Baguettebrötchen ausgebildete Backwaren 15 eingebracht; hier ist die zweitvorderste Backware 15 diejenige, die auf der Messfläche 7a liegt. Diese Anordnung der Messflächen 7a bezweckt, dass die Kraftaufnehmer 6 beispielsweise detektieren können, wenn die auf der jeweiligen Messfläche 7a befindliche Backware 15 - nach einer Kundenentnahme der vordersten Backware(n) 15 - die Messfläche 7a in Richtung des Entnahmeabschnitts 4 rutschend verlässt und beispielsweise keine weitere Backware 15 nachrutscht. Die entsprechend über die Zeit vom Kraftaufnehmer 6 erzeugten Signale können entsprechend von einer Steuereinheit 27 (s. Figur 3 und zugehörige Beschreibung weiter unten) verarbeitet und zur Steuerungssignale für insbesondere die Zuführeinrichtung 9 verwendet werden, insbesondere zum Nachfördern der entsprechenden Backwaren 15 in die entsprechenden Ausgabevorrichtungen 1 und/oder in die Backstation 11 zum zeitigen Nachbacken. Wenn beispielsweise der Kraftaufnehmer 6 jede Sekunde ein Messsignal an die Steuereinheit 27 übermittelt und innerhalb von fünf Sekunden keine Backware 15 auf eine frei gewordene Messfläche 7a nachrutscht, kann die derart informierte Steuereinheit 27 ein Nachliefersignal an die Zuführeinrichtung 9 senden. Zusätzlich oder alternativ ist es möglich, anhand der Anzahl der die Messfläche 7a passierenden Backwaren 15 eine Nachfrage- und Bedarfs-Statistik zu erstellen und/oder ein aktuelles Nachbacken von benötigten entsprechenden Backwaren 15 zu veranlassen und/oder Nachbestellungen beim Großbäcker zu ordern.

Im dargestellten Ausführungsbeispiel befinden sich im obersten Ausgabefach 2 zwei als Baguettes vorliegende Backwaren 15, wobei hier das vorderste auf der Messfläche 7a lagert. Rutscht das hintere Baguette nach Entnahme des vorderen nach, wird beispielsweise von der Steuereinheit 27 noch kein Signal zur Nachförderung an die Zuführeinrichtung 9 übermittelt. Dies geschieht erst, wenn bei der Entnahme des zweiten Baguettes keines nachrutscht.

Die vorgenannten Szenarien sind nur beispielhaft genannt. Die Anordnung der Kraftaufnehmer 6 in den Ausgabefächern 2 der Ausgabevorrichtung 1 kann entsprechend des gewünschten Detektierens der An- und/oder Abwesenheit von Backwaren 15 auf der zugehörigen Messfläche 7a gewählt werden.

Auch ist es ohne weiteres möglich, dass die Backwaren 15 in einem Ausgabefach 2 nicht nur hintereinander, sondern auch nebeneinander lagern. Die Messfläche 7a erstreckt sich dann vorzugsweise derart über die Breite des Ausgabefachs 2, dass die mehreren nebeneinander lagernden Backwaren 15 allesamt erfasst werden.

Figur 3 zeigt eine schematische Darstellung der Signalübermittlung eines Kraftaufnehmers 6 an die Steuereinheit 27 (nicht gezeigt ist die Zwischenspeicherstation 12). Die Steuereinheit 27 übermittelt die empfangenen elektrischen Signale des Kraftaufnehmers 6 an die Zuführeinrichtung 9, welche die jeweiligen erforderlichen Befehle ausführt. Die Signalübermittlungspfade sind mit Pfeilen f5 gekennzeichnet. Bei Erkennung eines Bedarfs an aufgebackenen Backwaren 15 mit Hilfe der Kraftaufnehmer 6 in den jeweiligen Ausgabefächern 2 führt die Zuführeinrichtung 9 beispielsweise Träger 14 der Backstation 11 zu. Alternativ oder zusätzlich ist es denkbar, dass die Zuführeinrichtung 9 Träger 14 mit bereits fertig aufgebackenen Backwaren 15 aus einer der dafür vorgesehenen Speicherstationen 10, 12 entnimmt und die Ausgabevorrichtung 1 durch den Zuführabschnitt 5 mit Backwaren 15 versorgt. Das Befüllen des Zuführabschnitte 5, beispielsweise durch Abkippen des Trägers 14, kann verschiedenartig erfolgen, beispielsweise mittels eines Trichters am Zuführabschnitt, eines endseitigen Trichters an der Zuführeinrichtung 9, einer an die Breite des Trägers 14 angepassten Breite des Zuführabschnitts 3, etc.

Zudem kann die Steuereinheit 27 Signale an eine Signalausgebeeinrichtung 8 übermitteln, die vorliegend an der Einschleuse- und Speicherstation 10 angeordnet ist und an welcher das Bedienpersonal beispielsweise Bestandsinformationen sowie mögliche Fehlermeldungen ablesen kann.

Allgemein sind mittels der Kraftaufnehmer 6 zeitbezogene und/oder ereignisbezogene und/oder abfragespezifische Messungen in Bezug auf die Backwaren 15 durchführbar.

In dem Ausführungsbeispiel gemäß der Figur 4 sind zusätzlich motorisch angetriebene Rüttler 26 angedeutet, die auf die jeweilige gesamte Transportfläche 3 einzuwirken vermögen und das schwerkraftgetriebene Rutschen der Backwaren 15 über die Transportfläche 3 in den Entnahmeabschnitt 4 in Rutschrichtung f3 unterstützen. Die Anordnung der Rüttler 26 neben dem jeweiligen Kraftaufnehmer 6 ist lediglich als Beispiel aufgeführt.

In den Figuren 2 und 4 sind die Entnahmeabschnitte 4 der Ausgabefächer 2 mit jeweils einer verschwenkbaren oder verschiebbaren Klappe 18 verschließbar. Bevorzugt sind die Klappen 18 aus einem durchsichtigen Material ausgebildet, so dass der Kunde die Backwaren 15 in den Ausgabefächern 2 einsehen kann. Gemäß einer Alternative weisen die Entnahmeabschnitte 4 sich im Querschnitt verengende Schlitze auf, durch welche der Kunde hindurch greifen muss, um die jeweils vorderste Backware 15 entnehmen zu können. Vorzugsweise sind weiterhin die Ausgabefächer 2 jeweils als gitterartiges Gestell ausgebildet. Alternativ bestehen sie aus einem durchsichtigen Material, insbesondere aus Kunststoff (z.B. Plexiglas) oder Glas.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Ausgabevorrichtung
- 2: Ausgabefach
- 3: Transportfläche
- 4: Entnahmeabschnitt
- 5: Zuführabschnitt
- 6: Kraftaufnehmer
- 7: Messeinrichtung
- 7a: Messfläche
- 8: Signalausgabeeinrichtung
- 9: Zuführeinrichtung
- 10: Einschleuse- und Speicherstation
- 11: Backstation
- 12: Zwischenspeicherstation
- 14: Träger
- 15: Backwaren
- 16: Anförderband
- 17: Abförderband
- 18: Klappe
- 20: Vorrichtung zum Speichern, Backen und Ausgeben von Backwaren
- 24: Speicherfächer
- 25: Innenraum
- 26: Rüttler
- 27: Steuereinheit
- f1: Förderrichtung
- f2: Förderrichtung
- f3: Rutschrichtung
- f4: Förderrichtung
- f5: Signalübermittlung

## Patentansprüche

1. Ausgabevorrichtung (1) zum Vorhalten, Präsentieren und Entnehmen von gebackenen Backwaren (15), mit mindestens einem Ausgabefach (2), wobei das mindestens eine Ausgabefach (2) umfasst:
- einen Zuführabschnitt (5), der die Bestückung des mindestens einen Ausgabefaches (2) mit Backwaren (15) ermöglicht,
- einen Entnahmeabschnitt (4) zum Entnehmen der Backwaren (15),
- eine zwischen dem Zuführabschnitt (5) und dem Entnahmeabschnitt (4) angeordnete Transportfläche (3), auf der die Backwaren (15) vom Zuführabschnitt (5) zum Entnahmeabschnitt (4) gelangen, und
- eine Messeinrichtung (7), wobei die Backwaren (15) auf ihrem Weg vom Zuführabschnitt (5) zum Entnahmeabschnitt (4) die Messeinrichtung (7) passieren, wobei die Messeinrichtung (7) die Anwesenheit dieser Backwaren (15) und/oder die Abwesenheit von Backwaren (15) registriert und entsprechende elektrische Signale erzeugt, **dadurch gekennzeichnet, dass** die Messeinrichtung (7) eine Messfläche (7a) im Bereich der Transportfläche (3) und einen mit der Messfläche (7a) gekoppelten Kraftaufnehmer (6), insbesondere einen Kraftsensor, umfasst, wobei die Backwaren (15) auf ihrem Weg vom Zuführabschnitt (5) zum Entnahmeabschnitt (4) zeitweise auf der Messfläche (7a) aufliegen oder über die Messfläche (7a) rutschen, wobei der Kraftaufnehmer (6) die besagten elektrischen Signale erzeugt.

2. Ausgabevorrichtung (1) nach Anspruch 1, **dadurch gekennzeichnet, dass** der Kraftaufnehmer (6) als eine Wägezelle ausgebildet ist.

3. Ausgabevorrichtung (1) nach einem oder mehreren der vorherigen Ansprüche, **dadurch gekennzeichnet, dass** die Messfläche (7a) derart angeordnet ist, dass mindestens eine hinter der im Entnahmeabschnitt (4) vordersten Backware (15) befindliche Backware (15) auf der Messfläche (7a) lagerbar ist.

4. Ausgabevorrichtung (1) nach einem oder mehreren der vorherigen Ansprüche, **dadurch gekennzeichnet, dass** die Messeinrichtung (7), insbesondere der Kraftaufnehmer (6), mit einer zur Ausgabevorrichtung (1) gehörenden oder einer externen Steuereinheit (27) gekoppelt ist, die derart ausgebildet und eingerichtet ist, dass sie die von der Messeinrichtung (7), insbesondere dem Kraftaufnehmer (6), übermittelten elektrischen Signale an eine Zuführeinrichtung (9) übermitteln und verarbeiten kann, wobei die Zuführeinrichtung (9) vorzugsweise zum automatischen Zuführen von Backwaren (15) zum Ausgabefach (2) ausgebildet ist.

5. Ausgabevorrichtung (1) nach einem oder mehreren der vorherigen Ansprüche, **dadurch gekennzeichnet, dass** mittels der Messeinrichtung (7), insbesondere mittels des Kraftaufnehmers (6), zeitbezogene und/oder ereignisbezogene und/oder abfragespezifische Messungen in Bezug auf die Backwaren (15) durchführbar sind.

6. Ausgabevorrichtung (1) nach einem oder mehreren der vorherigen Ansprüche, **dadurch gekennzeichnet, dass** der Kraftaufnehmer (6) neben oder unterhalb der Messfläche (7a) angeordnet ist.

7. Ausgabevorrichtung (1) nach einem oder mehreren der vorherigen Ansprüche, **dadurch gekennzeichnet, dass** die Transportfläche (3) in einem Winkel zwischen 20° und 60° geneigt oder gebogen abwärts in Richtung des Entnahmeabschnitts (4) ausgebildet ist, wobei die Backwaren (15) zumindest teilweise von ihrer Schwerkraft getrieben zum Entnahmeabschnitt (4) zu rutschen vermögen.

8. Ausgabevorrichtung (1) nach einem oder mehreren der vorherigen Ansprüche, **dadurch gekennzeichnet, dass** mindestens ein Rüttler (26) vorgesehen ist, der zum zumindest abschnittsweisen Einwirken auf die Backwaren (15) auf der Transportfläche (3) ausgebildet und eingerichtet ist, vorzugsweise unterstützt durch eine Neigung der Transportfläche (3).

9. Ausgabevorrichtung (1) nach einem oder mehreren der vorherigen Ansprüche, **dadurch gekennzeichnet, dass** der Entnahmeabschnitt (4) zur Entnahme vorzugsweise einzelner Backwaren (15) mit einer beweglichen Klappe (18) verschließbar und/oder als Schlitz ausgebildet ist, und/oder
dass das Ausgabefach (2) ein vorzugsweise gitterartiges Gestell umfasst und/oder aus einem durchsichtigen Material, insbesondere aus Kunststoff oder Glas, ausgebildet ist.

10. Vorrichtung (20) zum Speichern, Backen und Ausgeben von Backwaren (15), mit zumindest einer Speicherstation (10; 12) zur Aufnahme von ungebackenen oder noch nicht fertig gebackenen Backwaren (15), zumindest einer Backstation (11) zum Backen dieser Backwaren (15) und zumindest einer Ausgabevorrichtung (1), an welcher gebackene Backwaren (15) vorgehalten, präsentiert und/oder entnommen werden können,
**dadurch gekennzeichnet, dass** die Ausgabevorrichtung (1) nach einem oder mehreren der vorherigen Ansprüche ausgebildet ist.

11. Vorrichtung nach dem vorhergehenden Anspruch, **dadurch gekennzeichnet, dass** sie eine Zuführeinrichtung (9) umfasst, die zum automatisierten Transport von ungebackenen, vorgebackenen und/oder gebackenen Backwaren (15) zwischen zumindest zwei der folgenden Einrichtungen ausgebildet und eingerichtet ist:
- Einschleuse- und/oder Speicherstation (10),
- Backstation (11),
- optional vorhandene Zwischenspeicherstation (12) zum Speichern von mit Backwaren (15) beladenen oder leeren Trägern (14),
- Ausgabevorrichtung (1).

12. Vorrichtung nach dem vorhergehenden Anspruch, **dadurch gekennzeichnet, dass** die Zuführeinrichtung (9) als Roboter ausgebildet ist.

13. Vorrichtung nach dem vorhergehenden Anspruch, **dadurch gekennzeichnet, dass** der Roboter zentral zwischen der Einschleuseund/oder Speicherstation (10), der Backstation (11), der ggf. vorhandenen Zwischenspeicherstation (12) und der Ausgabevorrichtung (1) angeordnet ist.

14. Vorrichtung nach einem der Ansprüche 10-13, **dadurch gekennzeichnet, dass** eine Steuereinheit (27) zur Steuerung der automatisierten Zuführeinrichtung (9) vorgesehen ist, die auch die elektrischen Signale der Messeinrichtung (7) der Ausgabevorrichtung (1), insbesondere des Kraftaufnehmers (6), verarbeitet und entsprechend die automatisierte Zuführeinrichtung (9) ansteuert.

## Claims

1. Dispensing device (1) for holding, presenting and removing baked bakery goods (15), with at least one dispensing tray (2), wherein the at least one dispensing tray (2) comprises:
- a supply section (5) which allows the supply of the at least one dispensing tray (2) with bakery goods (15),
- a removal section (4) for removing the bakery goods (15),
- a transport surface (3) arranged between the supply section (5) and the removal section (4) on which the bakery goods (15) arrive from the supply section (5) at the removal section (4), and
- a measuring device (7), wherein the bakery goods (15) pass the measuring device (7) on their way from the supply section (5) to the removal section (4), wherein the measuring device (7) registers the presence of these bakery goods (15) and/or the absence of bakery goods (15) and generates corresponding electrical signals, **characterized in that** the measuring device (7) comprises a measuring surface (7a) in the region of the transport surface (3) and a force transducer (6), in particular a force sensor, coupled to the measuring surface (7a), wherein the bakery goods (15), on their way from the supply section (5) to the removal section, (4) temporarily rest on the measuring surface (7a) or slide over the measuring surface (7a), wherein the force transducer (6) generates said electrical signals.

2. Dispensing device (1) according to claim 1, **characterized in that** the force transducer (6) is designed as a load cell.

3. Dispensing device (1) according to one or more of the preceding claims, **characterized in that** the measuring surface (7a) is arranged such that at least one bakery good (15) located behind the foremost bakery good (15) in the removal section (4) can rest on the measuring surface (7a).

4. Dispensing device (1) according to one or more of the preceding claims, **characterized in that** the measuring device (7), in particular the force transducer (6), is coupled to a control unit (27) associated with the dispensing device (1) or to an external control unit (27), which is designed and arranged such that it is operable to transmit and process the electrical signals transmitted by the measuring device (7), in particular the force transducer (6), to a feed device (9), wherein the feed device (9) is preferably designed to automatically supply bakery goods (15) to the dispensing tray (2).

5. Dispensing device (1) according to one or more of the preceding claims, **characterized in that** by means of the measuring device (7), in particular by means of the force transducer (6), time-related and/or event-related and/or query-specific measurements in relation to the bakery goods (15) are possible.

6. Dispensing device (1) according to one or more of the preceding claims, **characterized in that** the force transducer (6) is arranged next to or below the measuring surface (7a).

7. Dispensing device (1) according to one or more of the preceding claims, **characterized in that** the transport surface (3) is formed at an angle between 20° and 60° inclined or bent downwards in the direction of the removal section (4), wherein the bakery goods (15) are able, at least partially driven by their gravity, to slide to the removal section (4).

8. Dispensing device (1) according to one or more of the preceding claims, **characterized in that** at least one vibrator (26) is provided, which is designed and arranged for at least partially acting on the bakery goods (15) on the transport surface (3), preferably supported by an inclination of the transport surface (3).

9. Dispensing device (1) according to one or more of the preceding claims, **characterized in that** the removal section (4) for removing preferably individual bakery goods (15) is designed to be closeable with a movable flap (18) and/or is designed as a slot and/or that the dispensing tray (2) comprises a preferably grid-like frame and/or is formed of a transparent material, in particular of plastic or glass.

10. Device (20) for storing, baking and dispensing bakery goods (15), having at least one storage station (10; 12) for receiving unbaked or semibaked bakery goods (15), at least one baking station (11) for baking these bakery goods (15) and at least one dispensing device (1) at which baked bakery goods (15) can be held, presented and/or removed,
**characterized in that** the dispensing device (1) is designed according to one or more of the preceding claims.

11. Device according to the preceding claim, **characterized in that** it comprises a feed device (9) designed and arranged for automated transport of unbaked, pre-baked and/or baked bakery goods (15) between at least two of the following devices:
- infeed and/or storage station (10),
- baking station (11),
- optionally existing intermediate storage station (12) for storing carriers (14) loaded with bakery goods (15) or empty,
- dispensing device (1).

12. Device according to the preceding claim, **characterized in that** the feed device (9) is designed as a robot.

13. Device according to the preceding claim, **characterized in that** the robot is arranged centrally between the infeed and/or storage station (10), the baking station (11), the possibly existing intermediate storage station (12) and the dispensing device (1).

14. Device according to one of claims 10 - 13, **characterized in that** a control unit (27) for controlling the automated feed device (9) is provided, which also processes the electrical signals of the measuring device (7) of the dispensing device (1), in particular of the force transducer (6), and accordingly controls the automated feed device (9).

## Revendications

1. Dispositif de distribution (1) pour tenir à disposition, présenter et prélever des produits de boulangerie et de pâtisserie (15) cuits au four, avec au moins un compartiment de distribution (2), le, au moins un, compartiment de distribution (2) comprenant :
- une section d'amenée (5) qui permet de charger l'au moins un compartiment de distribution (2) avec des produits de boulangerie et de pâtisserie (15),
- une section de prélèvement (4) pour prélever les produits de boulangerie et de pâtisserie (15),
- une surface de transport (3) disposée entre la section d'amenée (5) et la section de prélèvement (4), sur laquelle les produits de boulangerie et de pâtisserie (15) sont amenés de la section d'amenée (5) à la section de prélèvement (4), et
- un dispositif de mesure (7), les produits de boulangerie et de pâtisserie (15) passant devant le dispositif de mesure (7) sur leur chemin de la section d'amenée (5) à la section de prélèvement (4), le dispositif de mesure (7) détectant la présence de ces produits de boulangerie et de pâtisserie (15) et/ou l'absence de produits de boulangerie et de pâtisserie (15) et générant des signaux électriques correspondants,
**caractérisé en ce que** le dispositif de mesure (7) comprend une surface de mesure (7a) dans la zone de la surface de transport (3) et un capteur d'effort (6), en particulier un capteur de force, couplé à la surface de mesure (7a), les produits de boulangerie et de pâtisserie (15) reposant temporairement sur la surface de mesure (7a) ou glissant sur la surface de mesure (7a) sur leur chemin de la section d'amenée (5) à la section de prélèvement (4), le capteur d'effort (6) générant lesdits signaux électriques.

2. Dispositif de distribution (1) selon la revendication 1, **caractérisé en ce que** le capteur d'effort (6) se présente sous la forme d'une cellule de pesée.

3. Dispositif de distribution (1) selon l'une quelconque ou plusieurs des revendications précédentes, **caractérisé en ce que** la surface de mesure (7a) est disposée de manière à ce qu'au moins un produit de boulangerie et de pâtisserie (15) situé derrière le tout premier produit de boulangerie et de pâtisserie (15) dans la section de prélèvement (4) puisse être stocké sur la surface de mesure (7a).

4. Dispositif de distribution (1) selon l'une quelconque ou plusieurs des revendications précédentes, **caractérisé en ce que** le dispositif de mesure (7), en particulier le capteur d'effort (6), est couplé à une unité de commande (27) appartenant au dispositif de distribution (1) ou externe qui est conçue et configurée de manière à pouvoir transmettre et traiter les signaux électriques transmis par le dispositif de mesure (7), en particulier le capteur d'effort (6), à un dispositif d'amenée (9), le dispositif d'amenée (9) se présentant de préférence sous une forme pour amener automatiquement les produits de boulangerie et de pâtisserie (15) au compartiment de distribution (2).

5. Dispositif de distribution (1) selon l'une quelconque ou plusieurs des revendications précédentes, **caractérisé en ce que** des mesures temporelles et/ou évènementielles et/ou spécifiques à une interrogation peuvent être effectuées sur les produits de boulangerie et de pâtisserie (15) au moyen du dispositif de mesure (7), en particulier au moyen du capteur d'effort (6).

6. Dispositif de distribution (1) selon l'une quelconque ou plusieurs des revendications précédentes, **caractérisé en ce que** le capteur d'effort (6) est disposé à côté ou en dessous de la surface de mesure (7a).

7. Dispositif de distribution (1) selon l'une quelconque ou plusieurs des revendications précédentes, **caractérisé en ce que** la surface de transport (3) se présente sous une forme inclinée ou incurvée vers le bas selon un angle compris entre 20° et 60° en direction de la section de prélèvement (4), les produits de boulangerie et de pâtisserie (15) pouvant glisser vers la section de prélèvement (4) au moins partiellement sous l'effet de leur gravité.

8. Dispositif de distribution (1) selon l'une quelconque ou plusieurs des revendications précédentes, **caractérisé en ce qu'**il est prévu au moins un vibrateur (26) qui est conçu et configuré pour agir au moins par sections sur les produits de boulangerie et de pâtisserie (15) sur la surface de transport (3), de préférence soutenu par une inclinaison de la surface de transport (3).

9. Dispositif de distribution (1) selon l'une quelconque ou plusieurs des revendications précédentes, **caractérisé en ce que** la section de prélèvement (4) pour le prélèvement de produits de boulangerie et de pâtisserie (15), de préférence individuels, peut être fermée par un volet mobile (18) et/ou se présente sous la forme d'une fente, et/ou en ce que le compartiment de distribution (2) comprend un bâti de préférence de type grille et/ou est formé d'un matériau transparent, en particulier de matière plastique ou de verre.

10. Dispositif (20) pour stocker, cuire au four et distribuer des produits de boulangerie et de pâtisserie (15), avec au moins une station de stockage (10 ; 12) pour accueillir des produits de boulangerie et de pâtisserie (15) non cuits ou dont la cuisson au four n'est pas encore terminée, au moins une station de cuisson au four (11) pour cuire au four ces produits de boulangerie et de pâtisserie (15) et au moins un dispositif de distribution (1) auquel des produits de boulangerie et de pâtisserie (15) cuits au four peuvent être tenus à disposition, présentés et/ou prélevés,
**caractérisé en ce que** le dispositif de distribution (1) se présente sous une forme selon l'une quelconque ou plusieurs des revendications précédentes.

11. Dispositif selon la revendication précédente, **caractérisé en ce qu'**il comprend un dispositif d'amenée (9) qui est conçu et configuré pour le transport automatisé de produits de boulangerie et de pâtisserie (15) non cuits, précuits et/ou cuits au four entre au moins deux des dispositifs suivants :
- station d'introduction et/ou de stockage (10),
- station de cuisson au four (11),
- station de stockage intermédiaire (12) facultative pour stocker des supports (14) chargés de produits de boulangerie et de pâtisserie (15) ou vides,
- dispositif de distribution (1).

12. Dispositif selon la revendication précédente, **caractérisé en ce que** le dispositif d'amenée (9) se présente sous la forme d'un robot.

13. Dispositif selon la revendication précédente, **caractérisé en ce que** le robot est disposé de manière centrale entre la station d'introduction et/ou de stockage (10), la station de cuisson au four (11), la station de stockage intermédiaire (12), le cas échéant, et le dispositif de distribution (1).

14. Dispositif selon l'une quelconque des revendications 10 à 13, **caractérisé en ce qu'**il est prévu une unité de commande (27) pour commander le dispositif d'amenée automatique (9), qui traite également les signaux électriques du dispositif de mesure (7) du dispositif de distribution (1), en particulier du capteur d'effort (6), et commande en conséquence le dispositif d'amenée automatique (9).
